# EUROPÄISCHE PATENTANMELDUNG

(11) **EP 3 834 911 A1**
(43) Veröffentlichungstag der Anmeldung: **16.06.2021**
(21) Anmeldenummer: 19215618.0
(22) Anmeldetag: 12.12.2019
(51) Int. Cl.: B01D 46/04, B01D 46/44, B01D 46/02, B01D 46/42, B01D 46/00, G01K 7/42, G01K 13/02, G01K 15/00

(54) **SCHLAUCHFILTERANLAGE MIT VERBESSERTER TEMPERATURERMITTLUNG**

(71) Anmelder: Primetals Technologies Austria GmbH, 4031 Linz (AT)
(72) Erfinder: HUSAKOVIC, Adnan, 4150 Rohrbach (AT); ROHRHOFER, Andreas, 4070 Eferding (AT); HARTL, Franz, 4720 Kallham (AT); MAYRHOFER, Anna, 4722 Peuerbach (AT); VOGLMAYR, Bernhard, 4060 Leonding (AT)
(74) Vertreter: Metals@Linz

(57) **Zusammenfassung**

Einer Schlauchfilteranlage wird ein heißes, staubbelastetes Abgas (4) zugeführt. Das Abgas (4) wird mittels einer Vielzahl von Schlauchfiltern (2) der Schlauchfilteranlage gereinigt und sodann an die Umgebung oder eine andere Anlage abgegeben. Mittels eines eingangsseitig der Schlauchfilteranlage angeordneten Temperatursensors (8) wird messtechnisch immer wieder ein Messwert (TM) für die Temperatur (T) des Abgases (4) beim Zuführen zur Schlauchfilteranlage erfasst. Der jeweilige Messwert (TM) wird einer Steuereinrichtung (6) der Schlauchfilteranlage zugeführt. Die Steuereinrichtung (6) ergreift mindestens eine Maßnahme zum Kühlen des der Schlauchfilteranlage zugeführten Abgases (4), sobald eine modellierte Temperatur (T') des Abgases (4) einen vorbestimmten Grenzwert (TG) übersteigt. Die Steuereinrichtung (6) ermittelt die modellierte Temperatur (T') des Abgases (4) mittels eines Streckenmodells (9) des Temperatursensors (8). Die modellierte Temperatur (T') weist gegenüber dem Messwert (TM) eine erhöhte Dynamik auf.

## Beschreibung

### Gebiet der Technik

Die vorliegende Erfindung geht aus von einem Betriebsverfahren für eine Schlauchfilteranlage,
- wobei der Schlauchfilteranlage ein heißes, staubbelastetes Abgas zugeführt wird,
- wobei das Abgas mittels einer Vielzahl von Schlauchfiltern der Schlauchfilteranlage gereinigt wird und sodann an die Umgebung oder eine andere Anlage abgegeben wird,
- wobei mittels eines eingangsseitig der Schlauchfilteranlage angeordneten Temperatursensors messtechnisch immer wieder ein Messwert für die Temperatur des Abgases beim Zuführen zur Schlauchfilteranlage erfasst wird,
- wobei der jeweilige Messwert einer Steuereinrichtung der Schlauchfilteranlage zugeführt wird,
- wobei die Steuereinrichtung mindestens eine Maßnahme zum Kühlen des der Schlauchfilteranlage zugeführten Abgases ergreift, sobald eine modellierte Temperatur des Abgases einen vorbestimmten Grenzwert übersteigt.

Die vorliegende Erfindung geht weiterhin aus von einer Schlauchfilteranlage,
- wobei die Schlauchfilteranlage eine Vielzahl von Schlauchfiltern aufweist, mittels derer ein heißes, staubbelastetes Abgas, das der Schlauchfilteranlage an einem Eingang zugeführt wird, gereinigt und sodann über einen Ausgang an die Umgebung oder eine andere Anlage abgegeben wird,
- wobei die Schlauchfilteranlage einen eingangsseitig der Schlauchfilteranlage angeordneten Temperatursensor aufweist, mittels dessen messtechnisch immer wieder ein Messwert für die Temperatur des der Schlauchfilteranlage zugeführten Abgases erfasst wird,
- wobei die Schlauchfilteranlage eine Steuereinrichtung aufweist, welcher der jeweilige Messwert zugeführt wird,
- wobei die Steuereinrichtung zum Kühlen des der Schlauchfilteranlage zugeführten Abgases eine Beeinflussungseinrichtung für das Abgas ansteuert, sobald eine modellierte Temperatur des Abgases einen vorbestimmten Grenzwert übersteigt.

### Stand der Technik

Für die Reinigung von staubbelasteten Abgasen werden oftmals Schlauchfilteranlagen eingesetzt. Die Abgase können beispielsweise - aber nicht nur - bei metallurgischen Prozessen anfallen. Beispiele derartiger metallurgischer Prozesse sind der Betrieb eines Lichtbogenofens, der Betrieb eines Konverters (BOF = blast oxygen furnace), der Betrieb einer Sinteranlage und andere mehr.

Bei Schlauchfilteranlagen wird das staubbelastete Abgas durch eine Vielzahl von Schlauchfiltern geführt. Die Anzahl an Schlauchfiltern liegt oftmals bei 1000 und mehr. Die Schlauchfilter sind jeweils auf einem Stützkorb montiert, der dem jeweiligen Schlauchfilter die erforderliche Stabilität verleiht. Das Abgas strömt, bezogen auf den jeweiligen Schlauchfilter, von außen nach innen. Beim Durchtritt durch den jeweiligen Schlauchfilter bleibt der Staub zum Großteil am jeweiligen Schlauchfilter hängen, tritt also nicht durch den Schlauchfilter hindurch. Die Reinigung der Schlauchfilter erfolgt dadurch, dass kurzzeitig das Innere der Schlauchfilter einem Überdruck ausgesetzt wird, so dass die Schlauchfilters sich aufblähen. Dadurch löst sich der an der Außenwand befindliche Staub (der sogenannte Filterkuchen) vom Schlauchfilter ab und fällt nach unten. Dort sammeln sich die Staubpartikel an und werden abtransportiert.

Damit die Schlauchfilteranlage ordnungsgemäß arbeitet, müssen alle oder zumindest fast alle Schlauchfilter staubdicht sein. Anderenfalls würde sehr schnell ein Ausstoß von ungereinigtem Abgas in die Umwelt erfolgen. Um staubdicht zu sein, dürfen die Schlauchfilter insbesondere keine Brandlöcher und dergleichen aufweisen. Derartige Brandlöcher können beispielsweise durch zu heißes Abgas oder durch noch glühende Partikel im Abgas verursacht werden. Zu hohe Betriebstemperaturen führen weiterhin auch zu einer vorzeitigen Alterung der Schlauchfilter.

Um derartige Probleme zu vermeiden, ist eingangsseitig der Schlauchfilteranlage mindestens ein Temperatursensor angeordnet. Mittels des Temperatursensors wird die Temperatur des Abgases erfasst. Ist die Temperatur zu hoch, werden entsprechende Gegenmaßnahmen ergriffen. Aus Redundanzgründen sind oftmals mehrere Temperatursensoren vorhanden.

Um auf Änderungen der Temperatur des Abgases oder auch auf kurzzeitige Temperaturspitzen reagieren zu können, ist es erforderlich, einen hochdynamischen Temperatursensor zu verwenden. Derartige Temperatursensoren existieren zwar, sind aber sehr empfindlich. Im rauen Betrieb in einer Schlauchfilteranlage hätten derartige Temperatursensoren nur sehr kurze Standzeiten, maximal wenige Tage. Ein dauerhafter Einsatz derartiger Temperatursensoren ist daher nicht möglich. In der Praxis werden daher Temperatursensoren verwendet, die den rauen Betrieb in einer Schlauchfilteranlage verkraften. Derartige Temperatursensoren reagieren aber träger auf Temperaturänderungen. In der Praxis liegen die Reaktionszeiten, bis ein Temperatursensor auf eine Temperaturänderung reagiert hat, im zweistelligen Sekundenbereich, beispielsweise bei ca. 30 Sekunden. Die Trägheit wird durch Staubanbackungen am Temperatursensor noch weiter vergrößert. In der Praxis kommt es daher oftmals zu deutlichen Abweichungen zwischen dem Messwert und der tatsächlichen Temperatur des Abgases.

Aus dem Fachaufsatz "In-situ measurement and dynamic compensation of thermocouple time constant in nuclear reactors" von V. Arunprasath et al., veröffentlicht in International Journal of Advanced Technology and Engineering Exploration, Vol 3 (22), Seiten 125 bis 130, ist ein Verfahren bekannt, mittels dessen bei Kernreaktoren gemessene Temperaturen in Temperaturen höherer Dynamik umgerechnet werden können.

### Zusammenfassung der Erfindung

Die Aufgabe der vorliegenden Erfindung besteht darin, Möglichkeiten zu schaffen, mittels derer die Dynamik bei der Temperaturermittlung verbessert werden kann und dennoch die Zuverlässigkeit der Messung unverändert hoch bleiben kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren der eingangs genannten Art dadurch ausgestaltet,
- dass die Steuereinrichtung die modellierte Temperatur des Abgases mittels eines Streckenmodells des Temperatursensors ermittelt und
- dass die modellierte Temperatur gegenüber dem Messwert eine erhöhte Dynamik aufweist.

Die Erfindung basiert auf dem Prinzip, vorab - beispielsweise durch Versuche - das Verhalten des Temperatursensors auf Temperaturänderungen zu ermitteln, also seine sogenannte Übertragungsfunktion. Dieses Verhalten kann sodann modelliert werden und das so erhaltene Verhalten invertiert werden. Das invertierte Verhalten entspricht dem Streckenmodell der vorliegenden Erfindung, welches bei gegebenem Verlauf des Messwertes den korrespondierenden Verlauf der tatsächlichen Temperatur liefert.

Durch die erfindungsgemäße Vorgehensweise kann somit weiterhin ein zuverlässiger, robuster Temperatursensor verwendet werden und dennoch die Temperaturentwicklung mit hoher Dynamik rekonstruiert werden.

Es ist möglich, dass das Streckenmodell des Temperatursensors zumindest einen ersten und einen zweiten Wichtungsfaktor umfasst und dass die Steuereinrichtung die modellierte Temperatur dadurch ermittelt, dass sie den jeweiligen Messwert mit dem ersten Wichtungsfaktor und die zeitliche Ableitung des Messwerts mit dem zweiten Wichtungsfaktor multipliziert und die beiden Produkte addiert. Diese Ausgestaltung ist relativ einfach und liefert bereits recht gute Ergebnisse. Gegebenenfalls kann diese Vorgehensweise durch weitere Wichtungsfaktoren ergänzt werden, mit denen höhere zeitliche Ableitungen der Temperatur gewichtet werden.

Alternativ ist es möglich, dass das Streckenmodell als neuronales Netz ausgebildet ist, insbesondere als rekurrentes neuronales Netz. Diese Vorgehensweise ist zwar etwas komplizierter bei der Implementierung, bietet jedoch den Vorteil, dass insbesondere bei relativ großvolumigen und damit entsprechend trägen Temperatursensoren das Temperaturverhalten sehr gut abgebildet werden kann. Auch ist die modellierte Temperatur rauschärmer. Das (rekurrente) neuronale Netz - englisch: (recurrent) neuronal network - muss natürlich entsprechend trainiert sein. Dies ist jedoch ohne weiteres im Rahmen einer Trainingsphase möglich.

Vorzugsweise ist der Temperatursensor als Thermoelement ausgebildet. Derartige Temperatursensoren sind besonders robust und auch weit verbreitet.

Das Streckenmodell weist Modellparameter auf. Vorzugsweise ermittelt die Steuereinrichtung die Modellparameter aufgrund einer Vorgabe eines Ermittlungsbefehls durch eine Bedienperson der Steuereinrichtung. Es ist also jederzeit möglich, dass die Bedienperson sozusagen auf Knopfdruck eine Neuermittlung der Modellparameter anstößt. Diese Vorgehensweise ist insbesondere deshalb von Vorteil, weil Staubanbackungen am Temperatursensor das dynamische Verhalten des Temperatursensors ändern können und durch die Neuermittlung diese Änderungen berücksichtigt werden können.

Um automatisiert eine dynamische Neuermittlung der Modellparameter durchführen zu können, ist es erforderlich, einen schnellen Temperatursensor temporär dem heißen Abgas auszusetzen, beispielsweise ihn in den Bereich des Temperatursensors zu verfahren, dessen Modellparameter ermittelt werden sollen. Der schnelle Temperatursensor reagiert erheblich schneller auf eine Änderung der Temperatur des Abgases als der Temperatursensor, dessen Modellparameter ermittelt werden sollen. Weil der schnelle Temperatursensor weiterhin nur temporär und damit nur kurze Zeit dem rauen Betrieb ausgesetzt ist, ist diese Vorgehensweise auch praktikabel und funktionsfähig. Das automatisierte Verfahren in den Bereich des Temperatursensors, dessen Modellparameter ermittelt werden sollen, und später wieder aus diesem Bereich heraus ist ohne weiteres realisierbar. Weiterhin sind auch andere Vorgehensweisen möglich, beispielsweise das automatisierte Entfernen einer Abdeckung von dem schnellen Temperatursensor und und ein späteres Wiederaufsetzen der Abdeckung auf den Temperatursensor.

Vorzugsweise ist die mindestens eine Maßnahme zum Kühlen des der Schlauchfilteranlage zugeführten Abgases ein Beimischen von Kaltluft zum Abgas. Diese Maßnahme ist besonders einfach. Weiterhin ist sie zuverlässig und ohne Rückwirkung auf den Prozess möglich, bei dem das Abgas anfällt. Es ist jedoch möglich, dass ein ausgangsseitig der Schlauchfilteranlage angeordnetes Gebläse, mittels dessen das heiße Abgas durch die Schlauchfilteranlage gesaugt wird, geringfügig stärker betrieben werden muss, da ein insgesamt höherer Gasstrom durch die Schlauchfilteranlage hindurch geführt werden muss.

Die Aufgabe wird weiterhin durch eine Schlauchfilteranlage mit den Merkmalen des Anspruchs 7 gelöst. Vorteilhafte Ausgestaltungen der Schlauchfilteranlage sind Gegenstand der abhängigen Ansprüche 8 bis 12.

Erfindungsgemäß wird eine Schlauchfilteranlage der eingangs genannten Art dadurch ausgestaltet, dass die Steuereinrichtung derart ausgebildet ist, dass sie die modellierte Temperatur des Abgases mittels eines Streckenmodells des Temperatursensors ermittelt und die modellierte Temperatur gegenüber dem Messwert eine erhöhte Dynamik aufweist.

Die dadurch erreichten Vorteile, die vorteilhaften Ausgestaltungen der Schlauchfilteranlage und die durch die vorteilhaften Ausgestaltungen der Schlauchfilteranlage erreichten Vorteile korrespondieren mit denen des Betriebsverfahrens.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Schlauchfilteranlage,
- FIG 2: einen einzelnen Schlauchfilter im Schnitt,
- FIG 3: den Schlauchfilter von FIG 2 von oben,
- FIG 4: ein mögliches Streckenmodell,
- FIG 5: ein Zeitdiagramm,
- FIG 6: eine Testanordnung,
- FIG 7: ein weiteres mögliches Streckenmodell und
- FIG 8: ein Zeitdiagramm.

### Beschreibung der Ausführungsformen

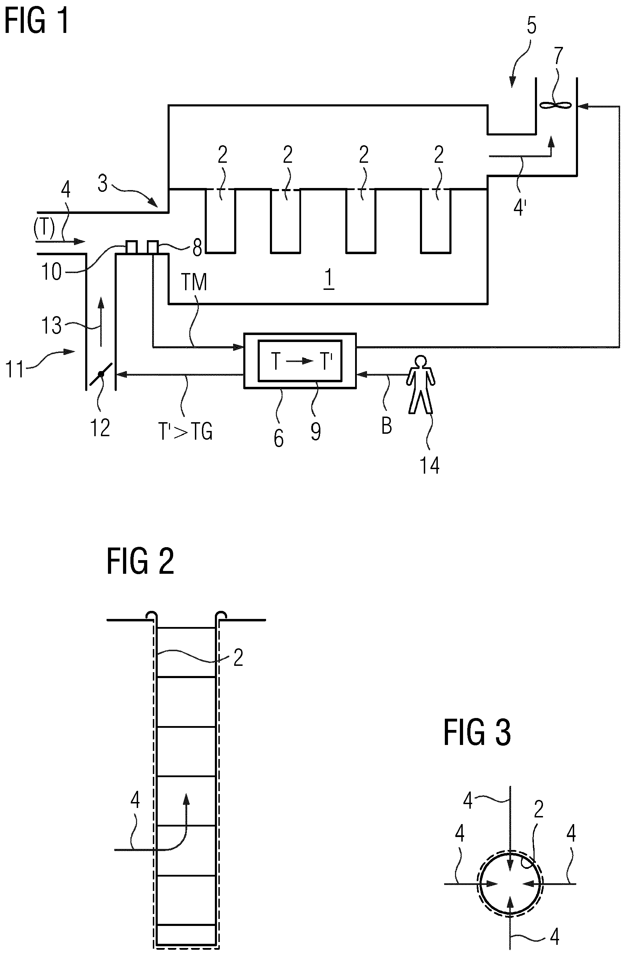

Gemäß FIG 1 weist eine Schlauchfilteranlage einen Filterraum 1 auf. Im Filterraum 1 ist eine Vielzahl von Schlauchfiltern 2 angeordnet. Über einen Eingang 3 der Schlauchfilteranlage wird dem Filterraum 1 ein Abgas 4 zugeführt. Das Abgas 4 ist in der Regel heiß und stets staubbelastet. Das Abgas 4 dringt entsprechend der Darstellung in den FIG 2 und 3 durch die Schlauchfilter 2 hindurch. Hierbei verbleibt der im Abgas 4 enthaltene Staub, wie in FIG 2 und 3 gestrichelt angedeutet ist, an der Außenseite der Schlauchfilter 2. Nach dem Durchdringen der Schlauchfilter 2 ist das Abgas 4 somit gereinigt. Dieses Gas wird nachfolgend als Reingas bezeichnet und mit dem Bezugszeichen 4' versehen. Das Reingas 4' wird über einen Ausgang 5 an die Umgebung oder eine andere Anlage abgegeben.

Die Schlauchfilteranlage wird von einer Steuereinrichtung 6 gesteuert. Beispielsweise kann die Steuereinrichtung 6 ein Gebläse 7 ansteuern, so dass der Abgasstrom eingestellt werden kann, der die Schlauchfilteranlage durchströmt.

Eingangsseitig der Schlauchfilteranlage, also im Bereich des Eingangs 3, ist ein Temperatursensor 8 angeordnet. Der Temperatursensor 8 ist vorzugsweise als Thermoelement (englisch: thermocouple) ausgebildet. Prinzipiell kann der Temperatursensor 8 aber auch andersartig ausgebildet sein, beispielsweise PT100-Sensor. Mittels des Temperatursensors 8 wird messtechnisch ein Messwert TM für die Temperatur T des Abgases 4 erfasst. Das Bezugszeichen T wird also für die tatsächliche Temperatur des Abgases 4 beim Zuführen zur Schlauchfilteranlage verwendet, das Bezugszeichen TM für den von dem Temperatursensor 8 gemessenen und abgegebenen Wert. Das Erfassen der Temperatur T bzw. das Abgeben des Messwertes TM erfolgt immer wieder, beispielsweise in einem zeitlichen Abstand von 20 ms oder 50 ms.

Der jeweils erfasste Messwert TM wird der Steuereinrichtung 6 zugeführt. Die Steuereinrichtung 6 weist intern ein Streckenmodell 9 des Temperatursensors 8 auf. Mittels des Streckenmodells 9 ermittelt die Steuereinrichtung 6 eine modellierte Temperatur T' des Abgases 4. Die Ermittlung erfolgt derart, dass die modellierte Temperatur T' gegenüber dem Messwert TM eine erhöhte Dynamik aufweist. Dadurch kann die modellierte Temperatur T' erheblich besser mit der tatsächlichen Temperatur T korrespondieren als der Messwert TM. Dies gilt sowohl für sprunghafte Änderungen der Temperatur T als auch für schnelle Schwankungen der Temperatur T.

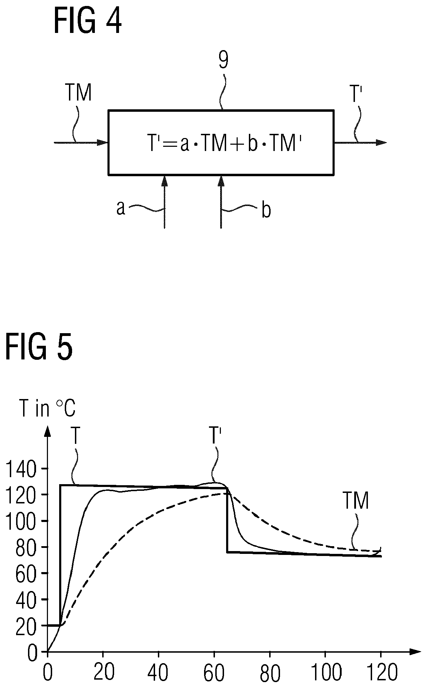

Beispielsweise kann das Streckenmodell 9 entsprechend der Darstellung in FIG 4 einen ersten Wichtungsfaktor a und einen zweiten Wichtungsfaktor b umfassen. In diesem Fall kann die Steuereinrichtung 6 die modellierte Temperatur T' entsprechend der Darstellung in FIG 4 dadurch ermitteln, dass sie den jeweiligen Messwert TM mit dem ersten Wichtungsfaktor a multipliziert und die zeitliche Ableitung TM' des Messwerts TM mit dem zweiten Wichtungsfaktor b multipliziert und sodann die beiden so ermittelten Produkte addiert. Die Ermittlung der zeitlichen Ableitung TM' des Messwerts TM aus der Differenz zweier unmittelbar aufeinanderfolgender Messwerte TM, dividiert durch die Zeitdifferenz der beiden Messwerte TM, ist Fachleuten allgemein bekannt.

Gegebenenfalls kann das Streckenmodell 9 auch weitere Wichtungsfaktoren umfassen. Mittels der weiteren Wichtungsfaktoren können in diesem Fall höhere zeitliche Ableitungen des Messwerts TM berücksichtigt werden.

Durch diese Vorgehensweise kann eine erhebliche Verbesserung der Dynamik erreicht werden. FIG 5 zeigt rein beispielhaft den zeitlichen Verlauf der Messwerte TM und der modellierten Temperatur T' bei einem Sprung der tatsächlichen Temperatur T von 20 °C auf 130 °C und einem späteren Sprung von 130 °C auf 80 °C.

Um eine derartige Verbesserung der Dynamik zu erreichen, müssen die Wichtungsfaktoren a und b (und gegebenenfalls auch die weiteren Wichtungsfaktoren) korrekt bestimmt sein. Eine derartige Bestimmung ist auf verschiedene Art und Weise möglich.

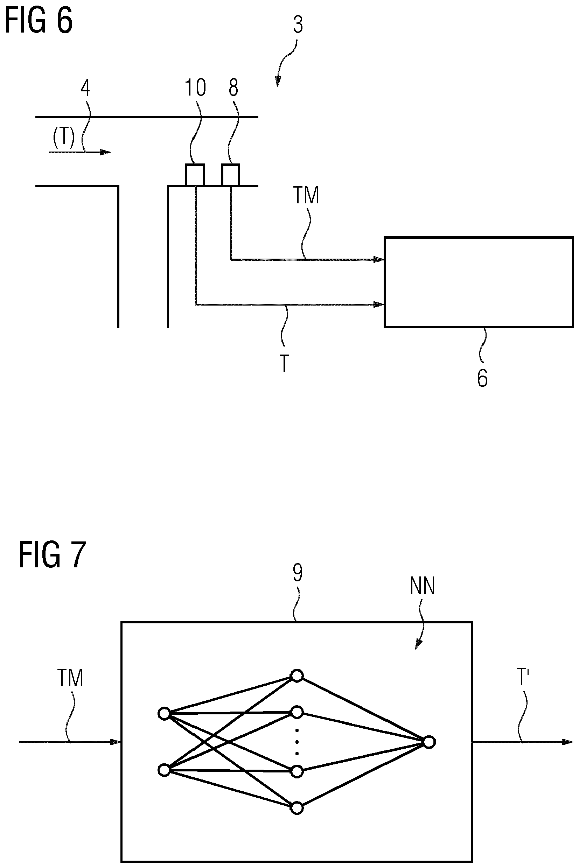

Beispielsweise ist es möglich, eine Testanordnung gemäß FIG 6 zu verwenden. Gemäß der Testanordnung von FIG 6 (siehe auch FIG 1) ist im Bereich des Eingangs 3 ein weiterer Temperatursensor 10 angeordnet. Der weitere Temperatursensor 10 weist eine erheblich größere Dynamik als der Temperatursensor 8 auf. Nun wird für eine bestimmte Zeit - beispielsweise 5 Minuten, 10 Minuten oder 1 Stunde - jeweils immer wieder ein Messwert TM des Temperatursensors 8 und ein jeweils korrespondierender Messwert des Temperatursensors 10 erfasst. Für den Messwert des weiteren Temperatursensors 10 wird nachfolgend das Bezugszeichen T verwendet, das auch für die tatsächliche Temperatur T verwendet wird. Dies ist vorliegend gerechtfertigt, weil der weitere Temperatursensor 10 eine erheblich größere Dynamik als der Temperatursensor 8 aufweist und daher die tatsächliche Temperatur T nahezu unverzögert messen kann.

Durch die Bildung der Differenz von je zwei aufeinanderfolgenden Messwerten TM des Temperatursensors 8 in Verbindung mit der zugehörigen Zeitdifferenz kann für jeden Messwert TM auch die zugehörige zeitliche Ableitung TM' ermittelt werden. Die beiden Wichtungsfaktoren a, b können sodann in allgemein bekannter Art und Weise mittels einer Regression ermittelt werden. Soweit erforderlich, kann die Regression ohne weiteres auch auf weitere Wichtungsfaktoren für höhere zeitliche Ableitungen erweitert werden. Entsprechende Verfahren sind Fachleuten allgemein bekannt.

Alternativ zu der Ausgestaltung gemäß FIG 4 kann das Streckenmodell 9 entsprechend der Darstellung in FIG 7 als neuronales Netz NN ausgebildet sein, insbesondere als rekurrentes neuronales Netz. Ein derartiges neuronales Netz NN kann insbesondere als sogenanntes Vanilla LSTM (LSTM = Long Short-Term Memory) vorliegen.

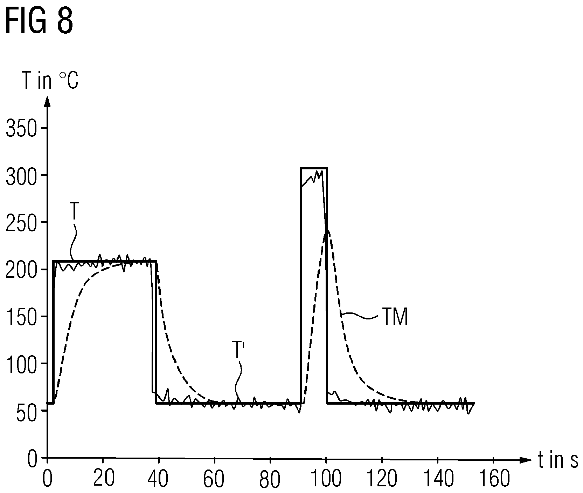

Durch diese Vorgehensweise kann eine noch größere Verbesserung der Dynamik erreicht werden. FIG 8 zeigt rein beispielhaft den zeitlichen Verlauf der Messwerte TM und der modellierten Temperatur T' bei einem Sprung der tatsächlichen Temperatur T von 60 °C auf 210 °C, einem späteren Sprung zurück auf 60 °C, gefolgt von einem weiteren Sprung °C auf 310 °C und einem späteren Sprung zurück wieder auf 60 °C.

Die Steuereinrichtung 6 vergleicht die modellierte Temperatur T' mit einem vorbestimmten Grenzwert TG. Der Grenzwert TG kann beispielsweise bei ca. 130 °C liegen. Liegt die modellierte Temperatur T' unterhalb des Grenzwertes TG, ergreift die Steuereinrichtung 6 keine weitergehenden Maßnahmen. Das Abgas 4 wird der Schlauchfilteranlage zugeführt wie es ist. Übersteigt die modellierte Temperatur T' hingegen den Grenzwert TG, ergreift die Steuereinrichtung 6 mindestens eine Maßnahme zum Kühlen des Abgases 4. Sie steuert also eine entsprechende Beeinflussungseinrichtung 11 an. Beispielsweise kann die Beeinflussungseinrichtung 11 als Zuluftkanal ausgebildet sein, in dem eine Drosselklappe 12 angeordnet ist. In diesem Fall wird die Drosselklappe 12 von der Steuereinrichtung 6 bei einem Überschreiten des Grenzwertes TG geöffnet. Durch das Öffnen der Drosselklappe 12 wird dem Abgas 4 Kaltluft 13 beigemischt. Die Kaltluft 13 kann der Umgebung entnommen werden. Sie weist also die Umgebungstemperatur auf, die in jedem Fall deutlich niedriger als die Temperatur T des Abgases 4 ist, beispielsweise zwischen 0 °C und 30 °C liegt. Diese Vorgehensweise ist Fachleuten allgemein bekannt und vertraut. Sie muss daher nicht näher erläutert werden.

Das Streckenmodell 9 weist Modellparameter auf. Im Falle der Ausgestaltung gemäß FIG 4 sind dies die Wichtungsfaktoren a und b (und gegebenenfalls weitere Wichtungsfaktoren). Im Falle der Ausgestaltung gemäß FIG 7 sind dies die "gelernten" Wichtungsfaktoren der Neuronen des neuronalen Netzes NN. Vorzugsweise kann eine Bedienperson 14 der Steuereinrichtung 6 einen Ermittlungsbefehl B vorgeben. Wird der Ermittlungsbefehl B vorgegeben, ermittelt die Steuereinrichtung 6 die Modellparameter des Streckenmodells 9 neu. Beispielsweise kann die Steuereinrichtung 6 den weiteren Temperatursensor 10 normalerweise in einem Zustand halten, in welcher er nicht dem Abgas 4 ausgesetzt ist, aufgrund des Ermittlungsbefehls B jedoch den weiteren Temperatursensor 10 dem Abgas 4 aussetzen und eine Messsequenz durchführen. Nach der Durchführung der Messsequenz überführt die Steuereinrichtung 6 den weiteren Temperatursensor 10 wieder in den Zustand, in welcher er nicht dem Abgas 4 ausgesetzt ist. Auf Basis der Messsequenz kann die Steuereinrichtung 6 sodann die Modellparameter ermitteln.

Die vorliegende Erfindung weist viele Vorteile auf. Insbesondere ist durch die Modellierung auf einfache und zuverlässige Weise eine sehr dynamische Ermittlung der Temperatur T des Abgases 4 möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Filterraum
- 2: Schlauchfilter
- 3: Eingang
- 4: Abgas
- 4': Reingas
- 5: Ausgang
- 6: Steuereinrichtung
- 7: Gebläse
- 8: Temperatursensor
- 9: Streckenmodell
- 10: weiterer Temperatursensor
- 11: Beeinflussungseinrichtung
- 12: Drosselklappe
- 13: Kaltluft
- 14: Bedienperson

- a, b: Wichtungsfaktoren
- B: Ermittlungsbefehl
- NN: neuronales Netz
- T, T': Temperaturen
- TG: Grenzwert
- TM: Messwert
- TM': zeitliche Ableitung des Messwertes

## Patentansprüche

1. Betriebsverfahren für eine Schlauchfilteranlage,
- wobei der Schlauchfilteranlage ein heißes, staubbelastetes Abgas (4) zugeführt wird,
- wobei das Abgas (4) mittels einer Vielzahl von Schlauchfiltern (2) der Schlauchfilteranlage gereinigt wird und sodann an die Umgebung oder eine andere Anlage abgegeben wird,
- wobei mittels eines eingangsseitig der Schlauchfilteranlage angeordneten Temperatursensors (8) messtechnisch immer wieder ein Messwert (TM) für die Temperatur (T) des Abgases (4) beim Zuführen zur Schlauchfilteranlage erfasst wird,
- wobei der jeweilige Messwert (TM) einer Steuereinrichtung (6) der Schlauchfilteranlage zugeführt wird,
- wobei die Steuereinrichtung (6) mindestens eine Maßnahme zum Kühlen des der Schlauchfilteranlage zugeführten Abgases (4) ergreift, sobald eine modellierte Temperatur (T') des Abgases (4) einen vorbestimmten Grenzwert (TG) übersteigt,
**dadurch gekennzeichnet,**
- **dass** die Steuereinrichtung (6) die modellierte Temperatur (T') des Abgases (4) mittels eines Streckenmodells (9) des Temperatursensors (8) ermittelt und
- **dass** die modellierte Temperatur (T') gegenüber dem Messwert (TM) eine erhöhte Dynamik aufweist.

2. Betriebsverfahren nach Anspruch 1,
dadur chgekennzeichnet,
dass das Streckenmodell (9) des Temperatursensors (8) zumindest einen ersten und einen zweiten Wichtungsfaktor (a, b) umfasst und dass die Steuereinrichtung (6) die modellierte Temperatur (T') dadurch ermittelt, dass sie den jeweiligen Messwert (TM) wird mit dem ersten Wichtungsfaktor (a) und die zeitliche Ableitung (TM') des Messwerts (TM) mit dem zweiten Wichtungsfaktor (b) multipliziert und die beiden Produkte addiert.

3. Betriebsverfahren nach Anspruch 1,
**dadurch gekennzeichnet,**
**dass** das Streckenmodell (9) als neuronales Netz (NN) ausgebildet ist, insbesondere als rekurrentes neuronales Netz.

4. Betriebsverfahren nach Anspruch 1, 2 oder 3,
**dadurch gekennzeichnet,**
**dass** der Temperatursensor (8) als Thermoelement ausgebildet ist.

5. Betriebsverfahren nach einem der obigen Ansprüche,
**dadurch gekennzeichnet,**
**dass** das Streckenmodell (9) Modellparameter aufweist und dass die Steuereinrichtung (6) die Modellparameter aufgrund einer Vorgabe eines Ermittlungsbefehls (B) durch eine Bedienperson (14) der Steuereinrichtung (6) ermittelt.

6. Betriebsverfahren nach einem der obigen Ansprüche,
**dadurch gekennzeichnet,**
**dass** die mindestens eine Maßnahme zum Kühlen des der Schlauchfilteranlage zugeführten Abgases (4) ein Beimischen von Kaltluft (13) zum Abgas (4) ist.

7. Schlauchfilteranlage,
- wobei die Schlauchfilteranlage eine Vielzahl von Schlauchfiltern (2) aufweist, mittels derer ein heißes, staubbelastetes Abgas (4), das der Schlauchfilteranlage an einem Eingang (3) zugeführt wird, gereinigt und sodann über einen Ausgang (5) an die Umgebung oder eine andere Anlage abgegeben wird,
- wobei die Schlauchfilteranlage einen eingangsseitig der Schlauchfilteranlage angeordneten Temperatursensor (8) aufweist, mittels dessen messtechnisch immer wieder ein Messwert (TM) für die Temperatur (T) des der Schlauchfilteranlage zugeführten Abgases (4) erfasst wird,
- wobei die Schlauchfilteranlage eine Steuereinrichtung (6) aufweist, welcher der jeweilige Messwert (TM) zugeführt wird,
- wobei die Steuereinrichtung (6) zum Kühlen des der Schlauchfilteranlage zugeführten Abgases (4) eine Beeinflussungseinrichtung (11) für das Abgas (4) ansteuert, sobald eine modellierte Temperatur (T') des Abgases (4) einen vorbestimmten Grenzwert (TG) übersteigt,
**dadurch gekennzeichnet,**
**dass** die Steuereinrichtung (6) derart ausgebildet ist, dass sie die modellierte Temperatur (T') des Abgases (4) mittels eines Streckenmodells (9) des Temperatursensors (8) ermittelt und die modellierte Temperatur (T') gegenüber dem Messwert (TM) eine erhöhte Dynamik aufweist.

8. Schlauchfilteranlage nach Anspruch 7,
**dadurch gekennzeichnet,**
**dass** das Streckenmodell (9) des Temperatursensors (8) zumindest einen ersten und einen zweiten Wichtungsfaktor (a, b) umfasst und dass die Steuereinrichtung (6) die modellierte Temperatur (T') dadurch ermittelt, dass sie den jeweiligen Messwert (TM) wird mit dem ersten Wichtungsfaktor (a) und die zeitliche Ableitung (TM') des Messwerts (TM) mit dem zweiten Wichtungsfaktor (b) multipliziert und die beiden Produkte addiert.

9. Schlauchfilteranlage nach Anspruch 7,
**dadurch gekennzeichnet,**
**dass** das Streckenmodell (9) als neuronales Netz, (NN) insbesondere als rekurrentes neuronales Netz, ausgebildet ist.

10. Schlauchfilteranlage nach Anspruch 7, 8 oder 9,
**dadurch gekennzeichnet,**
**dass** der Temperatursensor (8) als Thermoelement ausgebildet ist.

11. Schlauchfilteranlage nach einem der Ansprüche 7 bis 10,
**dadurch gekennzeichnet,**
**dass** das Streckenmodell (9) Modellparameter aufweist und dass die Steuereinrichtung (6) die Modellparameter aufgrund einer Vorgabe eines Ermittlungsbefehls (B) durch eine Bedienperson (14) der Steuereinrichtung (6) ermittelt.

12. Schlauchfilteranlage nach einem der Ansprüche 7 bis 11,
**dadurch gekennzeichnet,**
**dass** die Beeinflussungseinrichtung (11) ein Zuluftkanal mit einer Drosselklappe (12) ist, mittels dessen dem der Schlauchfilteranlage zugeführten Abgas (4) Kaltluft (13) beimischbar ist.
